# EUROPÄISCHE PATENTANMELDUNG

(11) **EP 0 674 859 A2**
(43) Veröffentlichungstag der Anmeldung: **04.10.1995**
(21) Anmeldenummer: 95104565.7
(22) Anmeldetag: 28.03.1995
(51) Int. Cl.: A44C 5/20

(54) **Verschluss für Schmuckteile**

(30) Priorität: 29.03.1994 DE 4410891
(71) Anmelder: Goldschmiede Appel & Wichelhaus GmbH, D-87435 Kempten (DE)
(72) Erfinder: Appel, Richard, D-87435 Kempten (DE); Wichelhaus, Eginhard, D-87435 Kempten (DE)

(57) **Zusammenfassung**

Es ist ein Verschluß für Schmuckteile mit zwei Verschlußteilen bekannt, die miteinander verbindbar sind, wobei das erste Verschlußteil zur Fixierung der Schließstellung ein federbelastetes Element aufweist. Um bei diesem bekannten Verschluß die Handhabung zu vereinfachen, weisen die beiden Verschlußteile in ihrem jeweiligen Stirnbereich jeweils eine quer verlaufende Aufnahmeöffnung (12,13) mit entgegengesetzter Ausrichtung derart auf, daß die beiden Verschlußteile in diesen Stirnbereichen ineinandersteckbar sind und daß im ersten Verschlußteil (1) das federbelastete Element (14) in der Schließstellung gegen die Stirnseite des zweiten Verschlußteils (2) drückt.

## Beschreibung

Die Erfindung bezieht sich auf einen Verschluß für Schmuckteile, insbesondere Armbänder, mit zwei Verschlußteilen, die miteinander verbindbar sind, wobei das erste Verschlußteil zur Fixierung der Schließstellung ein federbelastetes Element aufweist.

Ein derartiger Verschluß ist durch das Gebrauchsmuster 91 01 153 bekannt. Beim Schließen dieses bekannten Verschlusses wird zuerst das federbelastete Element in das zweite Verschlußteil eingesteckt und anschließend wird das erste Verschlußteil gegen die Federkraft um 90^{o} geschwenkt, damit das zweite Verschlußteil gegenüber dem ersten Verschlußteil in Schließstellung axial ausgerichtet ist. Bei diesem Verschluß ist es von Nachteil, daß beim verschwenken des ersten Verschlußteils gegenüber dem zweiten Verschlußteil beide Verschlußteile mit der Hand festgehalten werden müssen, so daß ein Bedienen dieses Verschlusses lediglich mit einer Hand nicht möglich ist.

Die Aufgabe der vorliegenden Erfindung besteht somit darin, den Verschluß der eingangs genannten Art derart weiterzuentwickeln, daß eine einfache Handhabung, insbesondere mit einer Hand, möglich ist, daß er einfach hergestellt werden kann und daß eine sichere Fixierung der beiden Verschlußteile in Schließstellung gewährleistet ist.

Zur Lösung dieser Aufgabe wird erfindungsgemäß vorgeschlagen, daß die beiden Verschlußteile in ihrem jeweiligen Stirnbereich jeweils eine querverlaufende Aufnahmeöffnung mit entgegengesetzter Ausrichtung derart aufweisen, daß die beiden Verschlußteile in diesen Stirnbereichen ineinandersteckbar sind und daß im ersten Verschlußteil das federbelastete Element in der Schließstellung gegen die Stirnseite des zweiten Verschlußteils drückt. Das Schließen des erfindungsgemäßen Verschlusses erfolgt durch eine einfache Steckbewegung, wobei die Stirnseiten der jeweiligen Verschlußteile in die entsprechenden Aufnahmeöffnungen gegen die Federkraft des federbelasteten Elementes gesteckt werden. In Schließstellung drückt dann das federbelastete Element gegen die Stirnseite des zweiten Verschlußteiles, so daß der Verschluß gegen ein Öffnen gesichert ist. Da nur eine einfache Steckbewegung und kein Drehen der Verschlußteile gegeneinander erforderlich ist, ist eine Handhabung mit einer Hand möglich.

Um die Aufnahmeöffnungen möglichst einfach herzustellen, sieht eine weitere Ausbildung der Erfindung vor, daß die Aufnahmeöffnungen als quer zu einer Mittelachse des ersten Verschlußteils bzw. des zweiten Verschlußteils verlaufende Sackschlitze ausgebildet sind. Der Sackschlitz kann durch ein Einsägen eines Verschlußteils im Stirnbereich hergestellt werden. Um Bruchstellen in den Verschlußteilen zu vermeiden, enden die Sackschlitze zweckmäßigerweise etwa an der Mittelachse des ersten bzw. des zweiten Verschlußteils. Die verbleibende Materialstärke der verschlußteile ist ausreichend für ihre Stabilität.

Eine weitere Ausgestaltung der Erfindung sieht vor, daß das federbelastete Element eine Kugel ist, welche innerhalb des ersten Verschlußteils angeordnet ist. Beim Einstecken der Stirnseite des zweiten Verschlußteils in das erste Verschlußteil gibt die Kugel aufgrund ihrer Form die Aufnahmeöffnung gegen die Federkraft frei.

Eine besonders bevorzugte Ausführungsform der Erfindung sieht vor, daß die Stirnseite des zweiten Verschlußteils eine Vertiefung zur Aufnahme des federbelasteten Elementes aufweist. Hierdurch wird der Verschluß in Schließstellung arretiert.

Um den Verschluß formschlüssig auszubilden, so daß in Schließstellung kein Spiel zwischen den Verschlußteilen besteht, sieht eine weitere Maßnahme der Erfindung vor, daß die Aufnahmeöffnung des ersten Verschlußteils und die Stirnseite des zweiten Verschlußteils die gleiche Breite aufweisen. Zweckmäßigerweise können beide Aufnahmeöffnungen und beide Stirnseiten die gleichen Breiten aufweisen.

Eine weitere besonders bevorzugte Ausführungsform der Erfindung sieht vor, daß in dem zweiten Verschlußteil ein federbelastetes Element vorgesehen ist, welches in der Schließstellung gegen die Stirnseite des ersten Verschlußteils drückt. Hierdurch wird eine zusätzliche Arretierung der beiden Verschlußteile geschaffen. Zudem sind nun beide Verschlußteile in gleicher Weise ausgebildet, so daß der eine Verschlußteil durch den anderen Verschlußteil ersetzt werden kann. Um auch für den zweiten Verschlußteil eine Arretierung zu schaffen, sieht eine Weiterbildung der Erfindung vor, daß die Stirnseite des ersten Verschlußteils eine Vertiefung zur Aufnahme des federbelasteten Elementes aufweist.

Die Erfindung wird nachstehend anhand der Zeichnung näher erläutert. Die Zeichnung zeigt Ausführungsbeispiele der Erfindung. Hierbei stellen dar:
- Figur 1: eine Seitenansicht des erfindungsgemäßen Verschlusses nach einem ersten Ausführungsbeispiel,
- Figur 2: eine Seitenansicht des Verschlusses nach einem zweiten Ausführungsbeispiel und
- Figur 3: eine Draufsicht nach Figur 2.

Der Verschluß besteht aus einem ersten Verschlußteil 1 und einem zweiten Verschlußteil 2, in welche sich nicht näher dargestellte Teile einer Kette oder eines Armbandes anschließen. Das Verschlußteil 1 besteht aus einem Rohr, welches in seinem Stirnbereich 3 durch eine Endplatte 4 abgeschlossen ist. Ebenso besteht das Verschlußteil 2 aus einem Rohr, welches in seinem Stirnbereich 5 durch eine Endplatte 6 abgeschlossen ist. Die ten 7, 8 symmetrisch zur Mittelachse 9 des Verschlußteils 1 bzw. des Verschlußteils 2 axial angeordnete Vertiefungen 10, 11 auf. Am Verschlußteil 1 ist ein quer zur Mittelachse 9 verlaufender Schlitz 12 als eine Aufnahmeöffnung vorgesehen, welcher bis zu der Mittelachse 9 verläuft. Ebenso ist an dem Verschlußteil 2 ein quer zur Mittelachse 9 verlaufender Schlitz 13 vorgesehen, welcher bis zur Mittelachse 9 verläuft. Der Schlitz 12 weist mit seinem offenen Ende in eine entgegengesetzte Richtung als der Schlitz 13. Die Schlitze 12 und 13 und die Endplatten 4 und 6 sind so ausgebildet, daß sie gleiche Breiten haben. Innerhalb des rohrförmigen Verschlußteils 1 ist ein federbelastetes Element 14 oder ein gleichwirkendes Element, beispielsweise aus Gummi angeordnet, welches eine Kugel ist und von einer Feder 15 beaufschlagt ist. Die Feder 15 stützt sich mit einem Ende gegen einen quer durch das Verschlußteil 1 verlaufenden Stift 16 ab. In dem Verschlußteil 2 ist eine Kugel 17 angeordnet, welche von einer Feder 18 beaufschlagt ist. Die Feder 18 stützt sich mit einem Ende gegen einen quer durch das Verschlußteil 2 verlaufenden Stift 19 ab. Beide federbelastete Kugeln 14, 17 drücken in der offenen Stellung des Verschlusses gegen die Innenseite 20 der Endplatte 4 bzw. gegen die Innenseite 21 der Endplatte 6.

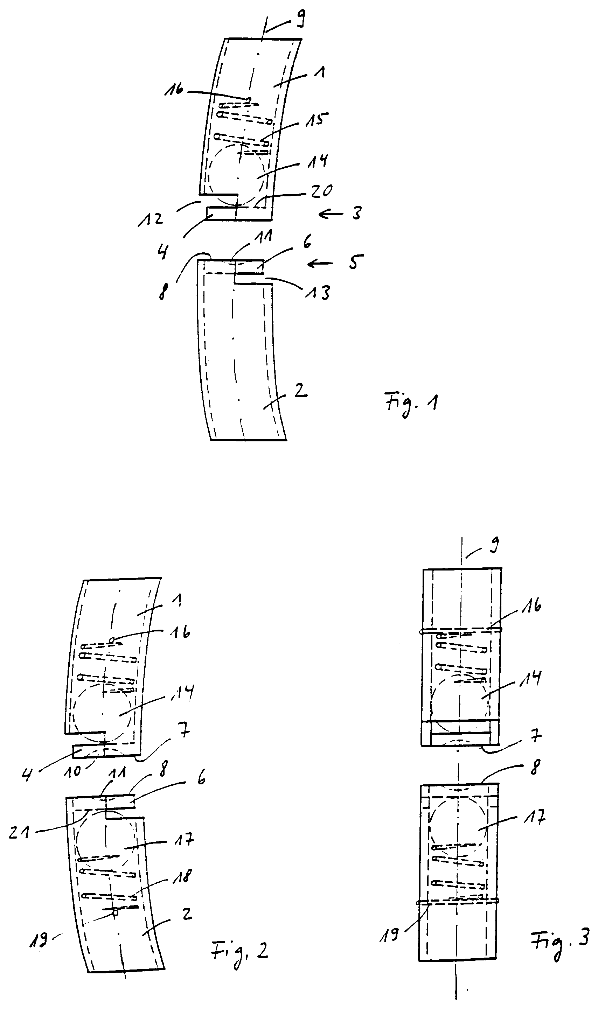

Beim Schließen des Verschlusses wird die Endplatte 6 in die Aufnahmeöffnung 12 bzw. die Endplatte 4 in die Aufnahmeöffnung 13 gesteckt und quer zur Mittelachse 9 verschoben. Bei dem Ausführungsbeispiel nach Figur 1, bei welchem nur ein Verschlußteil mit einem federbelasteten Element ausgestattet ist, wird beim Einstecken die Kugel 14 gegen die Federkraft der Feder 15 in axialer Richtung verschoben bis die Endplatte 6 an der Innenwandung des Verschlußteils 1 anliegt. Gleichzeitig liegt die Endplatte 4 an der Innenwandung des Verschlußteils 2 an. In diese Schließstellung drückt nun das federbelastete Element 14 gegen die Stirnseite 8 des zweiten Verschlußteils 2, wodurch der Verschluß arretiert wird.

Bei dem Ausführungsbeispiel gemäß Figur 2 wird das zusätzliche federbelastete Element 17 in dem Verschlußteil 2 beim Einstecken der Endplatte 4 gegen die Kraft der Feder 18 verschoben, so daß in Schließstellung das Element 17 gegen die Stirnseite 7 des ersten Verschlußelementes drückt. Durch die Ausstattung des zweiten Verschlußelementes 2 mit dem federbelasteten Element 17 wird eine zusätzliche Arretierung des Verschlusses in Schließstellung erreicht. Zum Lösen des Verschlusses werden die beiden Verschlußteile 1, 2 in entgegengesetzten Richtungen quer zur Mittelachse 9 auseinander bewegt. Da das Öffnen und Schließen des Verschlusses durch eine einfache Steckbewegung erfolgt, ist eine einfache Handhabung des Verschlusses insbesondere mit nur einer Hand möglich.

Eine zusätzliche Fixierung der Schließstellung erfolgt durch die Vertiefung 11 bei dem ersten Ausführungsbeispiel, bzw. die Vertiefungen 10, 11 bei dem zweiten Ausführungsbeispiel. In der Schließstellung greift das federbelastete Element 14 in die Vertiefung 11 bzw. das federbelastete Element 17 in die Vertiefung 10 ein und verhindert so ein unbeabsichtigtes Öffnen des Verschlusses.

## Patentansprüche

1. Verschluß für Schmuckteile, insbesondere Armbänder, mit zwei Verschlußteilen (1, 2), die miteinander verbindbar sind, wobei das erste Verschlußteil (1) zur Fixierung der Schließstellung ein federbelastetes Element (14) aufweist, **dadurch gekennzeichnet**, daß die beiden Verschlußteile (1, 2) in ihrem jeweiligen Stirnbereich (3, 5) jeweils eine quer verlaufende Aufnahmeöffnung (12, 13) mit entgegengesetzter Ausrichtung derart aufweisen, daß die beiden Verschlußteile (1, 2) in diesen Stirnbereichen (3, 5) ineinandersteckbar sind und daß im ersten Verschlußteil (1) das federbelastete Element (14) in der Schließstellung gegen die Stirnseite (8) des zweiten Verschlußteils (2) drückt.

2. Verschluß nach Anspruch 1, **dadurch gekennzeichnet**, daß jede Aufnahmeöffnung (12, 13) als ein quer zu einer Mittelachse (9) des ersten Verschlußteils (1) bzw. des zweiten Verschlußteils (2) verlaufender Sackschlitz ausgebildet ist.

3. Verschluß nach Anspruch 2, **dadurch gekennzeichnet**, daß die Sackschlitze etwa an der Mittelachse (9) des ersten Verschlußteils (1) bzw. des zweiten Verschlußteils (2) enden.

4. Verschluß nach einem der vorhergehenden Ansprüche, **dadurch gekennzeichnet**, daß das federbelastete Element (14) eine Kugel ist, welche innerhalb des ersten Verschlußteils (1) angeordnet ist.

5. Verschluß nach wenigstens einem der vorhergehenden Ansprüche, **dadurch gekennzeichnet**, daß die Stirnseite (8) des zweiten Verschlußteils (2) eine Vertiefung (11) zur Aufnahme des federbelasteten Elementes (14) aufweist.

6. Verschluß nach wenigstens einem der vorhergehenden Ansprüche, **dadurch gekennzeichnet**, daß die Aufnahmeöffnung (12) des ersten Verschlußteils (1) und eine stirnseitige Endplatte (6) des zweiten Verschlußteils (2) die gleiche Breite haben.

7. Verschluß nach wenigstens einem der vorhergehenden Ansprüche, **dadurch gekennzeichnet**, daß die beiden Aufnahmeöffnungen (12, 13) und die beiden stirnseitigen Endplatten (4, 6) der beiden Verschlußteile (1, 2) die gleichen Breiten haben.

8. Verschluß nach wenigstens einem der vorhergehenden Ansprüche, **dadurch gekennzeichnet**, daß in dem zweiten Verschlußteil (2) ein federbelastetes Elemente (17) vorgesehen ist, welches in der Schließstellung gegen die Stirnseite (7) des ersten Verschlußteils (1) drückt.

9. Verschluß nach Anspruch 8, **dadurch gekennzeichnet**, daS die Stirnseite (7) des ersten Verschlußteils (1) eine Vertiefung (10) zur Aufnahme des federbelasteten Elementes (17) aufweist.
